Europäisches Patentamt

European Patent Office

Office européen des brevets

(11) Veröffentlichungsnummer: **0 486 776 A1**

# EUROPÄISCHE PATENTANMELDUNG

(21) Anmeldenummer: **91114499.6**

(22) Anmeldetag: **29.08.91**

(51) Int. Cl.5: **A23L 1/23**

(30) Priorität: **17.11.90 DE 4036763**

(43) Veröffentlichungstag der Anmeldung:
**27.05.92 Patentblatt 92/22**

(84) Benannte Vertragsstaaten:
**BE CH DE FR GB LI NL**

(71) Anmelder: **RÜTGERSWERKE
AKTIENGESELLSCHAFT
Mainzer Landstrasse 217
W-6000 Frankfurt am Main 1(DE)**

(72) Erfinder: **Kunz, Benno, Prof. Dr.
Zoppoter Strasse 12
W-5309 Meckenheim(DE)**
Erfinder: **Reng, Hansgeorg
Richard Wagner Strasse 3
W-6719 Eisenberg(DE)**
Erfinder: **Höke, Hartmut, Dr.
Erfurter Strasse 89
W-4620 Castrop-Rauxel(DE)**
Erfinder: **Läufer, Albrecht, Dr.
Bodestrasse
W-6940 Weinheim(DE)**
Erfinder: **Lucas, Jürgen, Dr.
Am Schwanenmorgen
W-5300 Bonn(DE)**
Erfinder: **Panitz, Corinna
Auf der Tenten 8
W-5204 Lohmar-Birk(DE)**

(54) **Verfahren zur Herstellung von Lebensmittelaromen.**

(57) Die Erfindung betrifft ein Fermentationsverfahren zur Bildung abgerundeter Aromen, die zur Verbesserung und evtl. Intensivierung des Geschmacks und Geruchs von Lebensmitteln eingesetzt werden können.

EP 0 486 776 A1

Die Erfindung betrifft ein Fermentationsverfahren zur Bildung abgerundeter Aromen, die zur Verbesserung und/oder Intensivierung des Geschmacks und Geruchs von Lebensmitteln eingesetzt werden können.

Die Akzeptanz von Lebensmitteln durch den Verbraucher wird hauptsächlich durch die sensorische Qualität beeinflußt. In vielen Fällen wird diese im wesentlichen durch biochemische Reaktionen, hervorgerufen von Mikroorganismen, beeinflußt.

Durch gezielte Aromaverbesserungen von zahlreichen Lebensmitteln konnten in der Vergangenheit erhebliche Verbrauchssteigerungen erreicht werden. Damit verbunden ist ein zunehmender Bedarf an natürlichen Aromastoffen, die neben der Aromaverbesserung auch zum Ausgleich von Aromaverlusten durch technologische Bearbeitung verwendet werden. Biotechnologische Verfahren bieten die Chance, lebensmitteladäquate komplexe Aromen herzustellen.

Durch Einsatz von ausgewählten Mikroorganismen lassen sich Aromen gewinnen, deren Genese den entsprechenden natürlichen Reaktionsprinzipien entsprechen und daher sehr gut zur Veredelung von Lebensmitteln eingesetzt werden können.

Bekannt sind z. B. eine ganze Reihe von Verfahren zur fermentativen Gewinnung von Käsearomen, deren charakteristisches Merkmal darin besteht, daß ein definiertes, protein- und fetthaltiges Medium mit aus der Käseherstellung bekannten Miroorganismen in Rein- oder Mischkultur beimpft wird (z. B. DE-A 15 17 133, GB-A 1 057 710).

Zur Beschleunigung des Verfahrens und Erhöhung der Aromaausbeute können Lipasen oder Proteasen hinzugefügt werden, wie dies z. B. in DE-A1 34 44 282, US-A 3 100 153 oder DD 147 499 beschrieben ist.

Durch diese Enzyme werden Abbauprodukte gebildet, die selbst Aromastoffe sind oder die durch die Organismen zu den verschiedenen, für unterschiedliche Käsesorten spezifischen Aromastoffen weiter abgebaut werden.

In Schimmelpilzkäsearomen z. B. bilden vorwiegend leicht flüchtige Substanzgemische die jeweilige Kopfnote des Geschmacks und Geruchs. So wird Cheddararoma durch 2-Pentanon, Methanthiol und Aceton erzeugt, wobei Methanthiol als eine Schlüsselkomponente angesehen wird.

Folgerichtig werden in den bekannten Verfahren zur Herstellung von konzentrierten Lebensmittelaromen Mikroorganismenstämme eingesetzt, die in den Medien die für die angestrebte Aromanote charakteristischen Stoffwechselprodukte besonders stark anreichern.

Nachteil dieser Verfahren ist jedoch, daß, auch nachdem diese Aromen in Salatdressings, Snacks oder Schmelzkäsesorten eingearbeitet worden sind, sie im Vergleich zu den Aromen gereifter Käsesorten einen relativ unausgewogenen, eckigen Eindruck hinterlassen; das gilt z. B. für Roquefortaromen durch den hohen Anteil an Methylketonen. Ähnlich ist die Situation bei fruchtigen Aromen.

Es gibt z. B. viele Bemühungen, Pfirsicharoma, in dem verschiedene Laktone eine wesentliche Rolle spielen, mit Hilfe von Mikroorganismen herzustellen.

Bekannt sind beispielsweise Verfahren zur Biotransformation von Säurevorstufen zu einzelnen Laktonen mit Hilfe von Hefestämmen. Verwendet werden jedoch in diesem Fall synthetische Vorstufen, so daß man nicht mehr von natürlichen Produkten sprechen kann.

Zwar können auch aus Fettvorstufen oder Triglyceriden einzelne Laktone hergestellt werden, jedoch enthält natürliches Fruchtaroma eine komplexe Mischung verschiedener Laktone. Mischungen, die sich durch einen typischen Pfirsichgeruch auszeichnen, werden z. B. von Fusarium poae, einigen Pityrosporum-Arten und Monilia fructicola gebildet.

Jedoch wie beim Käsearoma werden auch fruchtige Geschmacksrichtungen von einer Mischung aromarelevanter Substanzen gebildet, die sich nur selten durch eine Komponente reproduzieren lassen. Sehr gering konzentrierte Substanzen im natürlichen Produkt, die im allgemeinen bei der Aromaherstellung nicht berücksichtigt werden, spielen jedoch häufig eine verstärkende oder abrundende Rolle bezüglich ihrer Wirkung im Lebensmittel.

Aufgabe der Erfindung ist es daher, ein Verfahren zur Verfügung zu stellen, durch das gezielt auf fermentativem Weg aus natürlichen Vorprodukten verschiedene komplexe, ausgewogene Lebensmittelaromen hergestellt werden können, die bei einer sensorischen Bewertung dem natürlichen Aroma ähnlich sind und einen abgerundeten Eindruck hinterlassen.

Die Lösung der Aufgabe erfolgt durch ein Verfahren gemäß der Ansprüche 1 bis 11.

Bei bekannten biotechnologischen Verfahren ist die Wahl des Mikroorganismus abhängig vom gewünschten Zielprodukt. Gleichzeitig liegt damit die Art des Substrats weitgehend fest. Während der Fermentation reichern sich dann spezifische, vom Stoffwechseltyp des Organismus abhängige Produkte im Medium an, die ein bestimmtes Aroma ausmachen. Das sich entwickelnde Aroma ist also bisher abhängig von der eingesetzten Mikroorganismenkultur und dem auf die Wachstumsgegebenheiten des Organismus zugeschnittenen Substrat.

Durch eigene Fermentationsversuche sowohl mit Rein- als auch mit Mischkulturen verschiedener Mikroorganismen wurde gefunden, daß mit Hilfe von einer einzigen Organismenkultur unterschiedliche Geschmacksnoten gezielt hergestellt werden können, wenn Medien gleicher Grundzusammensetzung mit verschiedenen natürlichen Substraten versetzt werden.

Wird z. B. ein Basismedium, das Saccharose, Natriumchlorid und Pepton enthält, mit Brotmehl versetzt, bildet sich in Gegenwart von Monascus purpureus ein fruchtiges Aroma.

Bei Zusatz von Vollmilchpulver, also eines proteinhaltigen Substrats, wird durch den gleichen Organismus ein charakteristisches Käsearoma erhalten.

So erhaltene Aromen haben in der sensorischen Bewertung überraschenderweise einen ausgewogenen, abgerundeten Charakter und können direkt, getrocknet oder in anderer Weise Lebensmitteln zugesetzt werden.

Als überraschender Nebeneffekt bedürfen auch Aromen, die auf der Basis von proteinhaltigen Medien hergestellt werden, keiner weiteren Behandlung, um einen eventuell gebildeten bitteren Beigeschmack zu entfernen, wie es bei sonst üblichen Verfahren notwendig ist.

Zur Durchführung des erfindungsgemäßen Verfahrens sind nicht pathogene, aus der Lebensmitteltechnologie bekannte Mikroorganismen vorzugsweise mit einem sehr breiten genetischen Spektrum, die aufgrund vielfältiger enzymatischer intrazellularer Variationsmöglichkeiten eine Vielzahl organischer Substrate zum Stoffwechsel nutzen können, einsetzbar.

Dazu gehören neben Pilzen der Gattung Monascus, Penicillium u. a., Bakterien der Gattung Brevibacterium, Lactobacillus oder Lactococcus u. a., Hefen der Gattung Saccharomyces, Candida u.a. Besonders gute Aromen wurden erhalten, wenn das Medium mit unterschiedlichen Mikroorganismen beimpft wurde, die miteinander kompatibel sind, wie zum Beispiel Stämmen der Spezies Monascus purpureus, Brevibacterium linens und Lactococcus lactis. Gut geeignet sind aber auch Penicillium caseicolum, Leuconostoc cremoris, Penicillium roquefortii und Saccharomyces cerevisiae.

Werden verschiedene Organismenspezies gemeinsam eingesetzt, können sie zu Beginn der Fermentation gemeinsam oder in zeitlichen Abständen nacheinander dem Kulturmedium zugeführt werden. Das letztere empfiehlt sich, wenn Mikroorganismen mit unterschiedlichen Wachstums- und Stoffwechselbedingungen zur Aromabildung benutzt werden.

Günstig ist es, wenn nach der Herstellung der Animpfkulturen das Inoculum in einer Mischkultur vorliegen kann. In dieser Weise sind z. B. Monascus purpureus, Brevibacterium linens und Lactobacillus casei miteinander verwendbar.

Kohlenhydrathaltige Substrate, die im erfindungsgemäßen Verfahren die Bildung intensiver, ausgewogener Aromen induzieren, sind Brotmehl, Semmelmehl, Paniermehl u. a. Diese können dem Fermentationsmedium in einer Menge von 5 bis 20 Gew.-% in Abhängigkeit vom gewünschten Endprodukt zugesetzt werden. Getreidemehle führen ebenfalls zur Bildung eines Aromas, jedoch ist dieses erheblich geringer ausgeprägt.

Als proteinhaltige Substrate können sowohl tierische als auch pflanzliche Produkte eingesetzt werden. Besonders gut geeignet sind Milchprodukte der Kuh, der Ziege und des Schafes, insbesondere Vollmilch, Vollmilchpulver oder Molkepulver.

Gut ausgeprägte Aromen werden gebildet, wenn das proteinhaltige Substrat in einer Menge von 5 bis 20 Gew.-%, insbesondere 10 Gew.-% dem Medium hinzugefügt wird.

Auf der Basis proteinhaltiger Medien induzierte Käsearomen können durch die Zugabe eines tierischen oder pflanzlichen Fettes variiert werden. Wird z. B. einem Medium, das Vollmilchpulver enthält, Butterfett hinzugefügt, bildet sich in Gegenwart der gleichen Organismenspezies statt eines Parmesanaromas ein Mischaroma der Richtung Parmesan/Roquefort.

Angenehme, abgerundete Aromen werden erhalten, wenn dem Fermentationsmedium proteinhaltiges und fetthaltiges Substrat im Verhältnis 1 : 0,5 bis 1 : 1,5 zugesetzt wird, die gemeinsam maximal 45 Gew.-% ausmachen.

Zur Durchführung des erfindungsgemäßen Verfahrens kann die Anzucht der Animpfkulturen, die Fermentation und die Aromagewinnung in an sich bekannter Weise, wie sie z. B. in DE-OS 34 44 282 A1 und WP-DD 208 545 oder anderer Literatur beschrieben ist, erfolgen.

Die Erfindung wird durch die folgenden Beispiele erläutert.

Die Beispiele stellen jedoch keine Einschränkung des oben beschriebenen dar. Änderungen und Modifikationen können durchgeführt werden, ohne den Rahmen der Erfindung zu verlassen.

**Beispiele**

Beispiel 1

200 ml eines Anzuchtmediums, das aus 30 g/l Malzextrakt, 3 g/l Pepton und destilliertem Wasser besteht, werden mit Monascus purpureus beimpft und bis zu einer Zelldichte von $30 \times 10^7$ Zellen/ml bebrütet.

Zur Herstellung des Fermentationsmediums werden 20 g/l Saccharose, 10 g/l NaCl und 5 g/l Pepton in Wasser gelöst. Dieses Basismedium wird mit 20 g/l Brotmehl verrührt und anschließend 20 min bei 121°C sterilisiert. Nach dem Abkühlen auf 35°C wird es mit der oben beschriebenen Vorkultur von Monascus purpureus beimpft. Bei beibehaltener Temperatur, guter Durchmischung und Belüftung hat sich nach 48 Stunden ein ange-

nehmes abgerundetes Fruchtaroma (apfelartig) ge-bildet, das in an sich bekannter Weise aufkonzentriert und weiterverarbeitet werden kann.

Beispiel 2

Die Anzucht der Vorkultur und die Herstellung des Fermentationsmediums erfolgt wie in Beispiel 1, jedoch werden als Substrat 50 g/l Vollmilchpulver hinzugefügt. Unter sonst gleichen Fermentationsbedingungen wie in Beispiel 1 hat sich innerhalb von 72 h ein charakteristisches, angenehem abgerundetes Käsearoma gebildet. Die Fermentationsbrühe wird sprühgetrocknet und das so erhaltene Pulver kann Lebensmitteln zugesetzt werden.

Beispiel 3

Die Anzucht einer Mischkultur, bestehend aus Monascus purpureus (DSM 1379), Brevibacterium linens (DSM 20426) und Lactococcus lactis (DSM 20072) erfolgt wie die der Reinkultur aus Beispiel 1.

Zur Herstellung des Fermentationsmediums wird die gleiche Zusammensetzung wie in Beispiel 1 gewählt, jedoch werden wie in Beispiel 2 50 g/l Vollmilchpulver und 0,2 g/l Lipase hinzugefügt. Unter sonst gleichen Fermentationsbedingungen wie in Beispiel 1 hat sich innerhalb 72 h ein typisches, angenehm abgerundetes Parmesankäsearoma gebildet, das, wie in Beispiel 2 beschrieben, verwendet werden kann.

Beispiel 4

Die Anzucht der Mischkultur erfolgt wie in Beispiel 3.

Zur Herstellung des Fermantationsmediums wird die gleiche Zusammensetzung wie in Beispiel 1 gewählt, jedoch werden zusätzlich zu den 50 g/l Vollmilchpulver des Beispiels 3 50 g/l Butterfett und 0,2 g/l Pankreatin hinzugefügt. Unter sonst gleichen Fermentationsbedingungen wie in Beispiel 1 hat sich innerhalb 72 h ein typisches, angenehm abgerundetes Roquefortaroma gebildet, das, wie in Beispiel 2 beschrieben, verwendet werden kann.

Beispiel 5

Die Anzucht der Vorkultur und die Herstellung des Fermentationsmediums erfolgt wie in Beispiel 1, jedoch werden als Substrat 250 g/l Molke und 0,1 g/l Lipase hinzugefügt. Unter sonst gleichen Fermentationsbedingungen wie in Beispiel 1 hat sich innerhalb von 96 h ein charakteristisches, an-genehm abgerundetes Käsearoma (vom Cheddar-typ) gebildet. Die Fermentationsbrühe wird sprühgetrocknet, und das so erhaltene Pulver kann Lebensmitteln zugesetzt werden.

**Patentansprüche**

1. Verfahren zur Herstellung ausgewogener komplexer Lebensmittelaromen durch Fermentation in Gegenwart von Rein- oder Mischkulturen nicht pathogener, aus der Lebensmitteltechnologie bekannter, pro- oder eukariontischer Mi-kroorganismenarten, **dadurch gekennzeich-net,** daß durch gezielte Zugabe natürlicher Substrate die Bildung einer vom hinzugefügten Substrat abhängigen komplexen abgerundeten Aromanote induziert wird.

2. Verfahren nach Anspruch 1, **dadurch gekennzeichnet**, daß als natürliche Substrate Brotmehl und/oder Vollmilchpulver und/oder Butter hinzugefügt wird.

3. Verfahren nach den Ansprüchen 1 und 2, **da-durch gekennzeichnet**, daß zur Aromabil-dung die Fermentationen in Gegenwart von Reinkulturen der Mikroorganismenart Monascus purpureus durchgeführt werden.

4. Verfahren nach den Ansprüchen 1 und 2, **da-durch gekennzeichnet**, daß zur Aromabil-dung die Fermentationen in Gegenwart von Mischkulturen der Mikroorganismenarten Monascus purpureus, Brevibacterium linens und Lactococcus lactis durchgeführt werden.

5. Verfahren nach den Ansprüchen 1, 3 und 4, **dadurch gekennzeichnet**, daß kohlenhydrathaltige Substrate, wie Brotmehl, Semmelmehl, Paniermehl und andere Mehlprodukte verwendet werden.

6. Verfahren nach den Ansprüchen 1, 3 und 4, **dadurch gekennzeichnet**, daß proteinhaltige Substrate wie tierische oder pflanzliche Milchprodukte verwendet werden.

7. Verfahren nach den Ansprüchen 1, 3 und 4, **dadurch gekennzeichnet**, daß kohlenhydrathaltige Substrate und proteinhaltige Substrate im Gemisch verwendet werden.

8. Verfahren nach den Ansprüchen 1 und 2, **dadurch gekennzeichnet**, daß proteinhaltige Substrate im Gemisch mit tierischen oder pflanzlichen Ölen oder Fetten verwendet werden.

9. Verfahren nach den Ansprüchen 1 und 2, **dadurch gekennzeichnet**, daß die natürlichen aromainduzierenden Substrate einzeln oder im Gemisch zugegeben werden.

10. Verfahren nach den Ansprüchen 6 bis 9, **dadurch gekennzeichnet**, daß das Fermentationsmedium ein zusätzliches Enzym oder Enzymgemisch enthält.

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | WORLD PATENTS INDEX LATEST Week 8534, Derwent Publications Ltd., London, GB; AN 85-206493 (34) & JP-A-60 130 327 (TAIYO FISHERY KK) 11. Juli 1985 * Zusammenfassung * | 1-3,5, 7-8 | A23L1/23 |
| Y | | 4 | |
| | --- | | |
| X | US-A-4 708 876 (HITOSHI YOKOYAMA ET AL.) * Spalte 4, Zeile 41 - Zeile 47; Ansprüche 1-6 * | 1,5-10 | |
| Y | | 4 | |
| | --- | | |
| Y | FOOD SCIENCE AND TECHNOLOGY ABSTRACTS AN 90:4753 DN 90-04-P0145 International Food Information Service (IFIS) Berkshire, Reading, GB. S.C. Kim et al. : "Production of methanethiol in milk fat-coated microcapsules containing Brevibacterium linens and methionine". & JOURNAL OF DAIRY RESEARCH, Band 56, Nr. 5 Seiten 799-811, 1989 * Zusammenfassung * | 4 | |
| | --- | | RECHERCHIERTE SACHGEBIETE (Int. Cl.5 ) |
| X | WORLD PATENTS INDEX LATEST Week 8925, Derwent Publications Ltd., London, GB; AN 89-181209 (25) & JP-A-1 117 762 (R. SARUNO) 10. Mai 1989 * Zusammenfassung * | 1,3 | A23L |
| | --- | | |
| Y | WORLD PATENTS INDEX LATEST Week 9045, Derwent Publications Ltd., London, GB; AN 90-338076 (45) & JP-A-2 242 666 (NISSHIN FLOUR MILL KK) 27. September 1990 * Zusammenfassung * | 1-3 | |
| | --- | | |
| | -/-- | | |

Der vorliegende Recherchenbericht wurde für alle Patentansprüche erstellt

| Rechercheort | Abschlußdatum der Recherche | Prüfer |
|---|---|---|
| BERLIN | 21 FEBRUAR 1992 | ALVAREZ ALVAREZ C. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes Dokument

EPO FORM 1503 03.82 (P0403)

Europäisches
Patentamt

**EUROPÄISCHER RECHERCHENBERICHT**

Nummer der Anmeldung

EP    91 11 4499
PAGE2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| Y | WORLD PATENTS INDEX LATEST<br>Week 8926,<br>Derwent Publications Ltd., London, GB;<br>AN 89-189383 (26)<br>& JP-A-1 128 743 (AJINOMOTO KK) 22. Mai 1989<br>* Zusammenfassung *<br>--- | 1-3 | |
| A | WORLD PATENTS INDEX LATEST<br>Week 8747,<br>Derwent Publications Ltd., London, GB;<br>AN 87-329219 (47)<br>& ES-A-8 707 412 (COOPERATIVA AGRICOL) 16.<br>Oktober 1987<br>* Zusammenfassung *<br><br>----- | 4 | |
| | | | **RECHERCHIERTE SACHGEBIETE (Int. Cl.5 )** |

Der vorliegende Recherchenbericht wurde für alle Patentansprüche erstellt

| Recherchenort | Abschlußdatum der Recherche | Prüfer |
|---|---|---|
| BERLIN | 21 FEBRUAR 1992 | ALVAREZ ALVAREZ C. |